# EUROPÄISCHE PATENTSCHRIFT

(11) **EP 4 054 473 B1**
(45) Veröffentlichungstag und Bekanntmachung des Hinweises auf die Patenterteilung: **20.08.2025**
(21) Anmeldenummer: 20803812.5
(22) Anmeldetag: 06.11.2020
(51) Int. Cl.: A61C 1/18, F16C 19/10, F16C 25/08, F16C 33/58

(54) **DENTALHANDSTÜCK UND AXIAL-RILLENKUGELLAGER**
DENTAL HANDPIECE AND THRUST BALL BEARING
PIECE A MAIN DENTAIRE ET BUTEE A BILLES

(30) Priorität: 06.11.2019 DE 102019129940
(43) Veröffentlichungstag der Anmeldung: 14.09.2022
(73) Patentinhaber: Gebr. Reinfurt GmbH & Co. KG, 97222 Rimpar (DE)
(72) Erfinder: ARMANI, Daniel, 97294 Marktheidenfeld (DE); NIEDERMEIER, Herbert, 97490 Poppenhausen (DE); VON DER GÖNNA, Marcel, 97828 Marktheidenfeld (DE)
(74) Vertreter: Dennemeyer & Associates S.A.
(86) Internationale Anmeldenummer: PCT/EP2020/081374
(87) Internationale Veröffentlichungsnummer: WO 2021/089838

(56) Entgegenhaltungen:
- DE-A1- 102004 053 194
- DE-A1- 102007 059 876
- DE-A1- 102011 081 881
- DE-A1- 2 524 917
- DE-A1- 2 943 483
- DE-A1- 3 302 545
- GB-A- 275 275
- US-A1- 2003 207 233

## Beschreibung

### Gebiet der Erfindung

Die Erfindung betrifft Dentalhandstücke, die mit einer Vielzahl verschiedener Dentalwerkzeuge zur Zahnbehandlung bestückt werden können. Dazu gehören z.B. Bohrer, Fräser, Feilen, Polierer, Glätter und/oder Finierer. Die Werkzeuge werden vor der Zahnbehandlung in das Dentalhandstück eingespannt und mithilfe eines pneumatischen Antriebs zum Rotieren gebracht. Der Antrieb wird dabei durch eine Turbine bewirkt, die mit Druckgas bzw. Druckluft betrieben wird. Das Gas bzw. die Antriebsluft wird dabei in der Regel durch Kanäle im Dentalhandstück der Turbine zugeführt. Die zugehörige Rotationsbewegung der Turbine und des damit angetriebenen Dentalwerkzeugs zeichnet sich durch hohe Drehzahlen von bis zu 500.000 Umdrehungen pro Minute aus.

Die praktischen Anforderungen an ein Dentalhandstück, insbesondere die hohen Drehzahlen, stellen eine Vielzahl von Herausforderungen an eine Lagerung der sich im Dentalhandstück drehenden Komponenten sowie an die darin eingespannten Dentalwerkzeuge dar. Die Lagerung erfolgt deshalb in der Regel mithilfe von Wälzlagern, wie z.B. Kugellagern. Sie ermöglichen eine Lagerung, die auch bei hohen Drehzahlen eine sichere und vibrationsarme Handhabung des Dentalhandstücks gewährleistet. Dabei stützen die Wälzlager eine Rotor- bzw. Hohlwelle des pneumatischen Antriebs, in die das Dentalwerkzeug mithilfe eines Spannfutters bzw. einer Spannzange eingespannt werden kann.

Die Wälzlager müssen nicht nur einen dauerhaften und möglichst reibungslosen bzw. ruhigen Betrieb bei hohen Drehzahlen gewährleisten. Sie müssen zudem mit den typischerweise sehr hohen Be- und Entschleunigungen der Rotorwelle bzw. der Dentalwerkzeuge zurechtkommen. Die zugehörigen Belastungen entstehen z.B. bei der Inbetriebnahme des Dentalhandstücks oder bei der Zahnbehandlung selbst, wenn das Dentalwerkzeug mit der zur Behandlung notwendigen Kraft auf einen Zahn gedrückt wird.

Die bei der Behandlung aufgewendeten Kräfte führen dabei nicht nur zu Reibungsverlusten und damit einhergehenden Ent- und Beschleunigungen des Dentalwerkzeugs, sondern auch zu Verkippungen des Werkzeugs im Dentalhandstück bzw. entsprechenden Kippmomenten, die vom Werkzeug über die Rotor- bzw. Hohlwelle direkt in die Wälzlager eingeleitet werden. Je nach Stärke der aufgewendeten Kräfte kann dies zu einer Überlastung der Lager führen.

Verkippungen von Achsen, z.B. von Lagerachsen und / oder Werkzeugachsen, treten nicht nur bei der Zahnbehandlung auf, sie sind oft auch das Ergebnis des engen Bauraums in einem Dentalhandstück. Der Bauraum ist durch Vorgaben der Dentalgerätehersteller stark eingeschränkt. So ist in den meisten Fällen der Innendurchmesser der Wälzlager auf 3,175 mm (1/8 Zoll), der Außendurchmesser auf 6,35 mm (1/4 Zoll) und die Breite auf 2,779 bzw. 2,38 mm festgelegt. Durch die Tatsache, dass die Kugellager zur Schwingungsdämpfung bevorzugt im Gehäuse auf O-Ringen abgestützt und in axialer Richtung jeweils durch eine Wellfederscheibe gegeneinander vorgespannt werden, kann die Rotorwelle bei Belastung des Bohrwerkzeugs eine verkippte Lage einnehmen. Als qualitätsmindernd werden bereits geringe Unwuchten, die aufgrund der hohen Drehzahlen zu beträchtlichen Vibrationen und Geräuschen führen, wahrgenommen.

Ein weiteres Problem stellt der Schmiermittelaustrag durch das Druckgas bzw. die Druckluft dar, das bzw. die durch den pneumatischen Antrieb bzw. die Turbine und das Dentalhandstück geleitet wird. Die Abluft der Turbine strömt teilweise durch die Kugellager und fördert den Schmierstoff nach außen, sodass bereits nach kurzer Zeit eine Mangelschmierungssituation entsteht. Nach jeder Zahnbehandlung wird eine Hygieneaufbereitung des Handstücks durchgeführt, indem dieses mit Wasser und/oder basischen Reinigungsmitteln gespült, geölt und mit Heißdampf sterilisiert wird.

### Stand der Technik

Ein Teil der soeben dargestellten Probleme wurde bereits in der Schrift US 4,249,896 A gelöst. Die Schrift schlägt ein Dentalhandstück mit zwei Radial-Rillenkugellagern vor, die sowohl an einem oberen als auch an einem unteren Bereich der Rotorwelle eines Dentalhandstücks mit Spannfutter angeordnet sind. Die Kugellager können somit Hebelkräfte auf das Spannfutter ausüben, die das Spannfutter sowie ein darin eingespanntes Werkzeug gegen Verkippungen stabilisieren. In einer Schnittansicht verbinden die zugehörigen Kipp- bzw. Belastungsachsen die beiden Kugellager X-förmig miteinander, weshalb diese Anordnung auch als X-Anordnung bezeichnet wird. Zusätzlich sind die Kugellager mithilfe von elastischen O-Ringen im Gehäuse gelagert, um Vibrationen, die auf das Gehäuse übertragen werden, zu dämpfen.

Die DE 10 2015 012 332 A1 stellt eine Weiterentwicklung derartiger Dentalhandstücke dar. Dort werden weitere Maßnahmen zur Kompensation von Kippeffekten vorgestellt, die bei Vorhandensein einer Verkippung vor allem auf eine Verringerung des elliptischen Charakters der Laufspur abzielen, indem die Außenringlaufbahn mit drei unterschiedlichen Zonen ausgestattet wird. Dadurch wird verhindert bzw. kompensiert, dass die Kugeln des Kugelsatzes bei Verkippung mit unterschiedlichen Geschwindigkeiten laufen und der Kugellagerkäfig frühzeitig infolge von Zwangskräften durch den Kugelsatz verschleißt und als Folge daraus das Kugellager ausfällt.

Das Problem des Schmiermittelaustrags durch das Druckgas bzw. die Druckluft wird durch die Haftvermittlerschicht kompensiert, die in der DE 10 2014 220 872 A1 beschrieben wurde. Die Schicht zieht Schmiermittel an und wird zweckmäßigerweise auf den Oberflächen der Kugeln, dem Innen- und / oder Außenring des vorgeschlagenen Radial-Rillenkugellagers aufgebracht.

Trotz dieser Fortschritte weisen die Dentalhandstücke, die aus dem Stand der Technik bekannt sind, immer noch eine Reihe von Problemen auf. Sie sind durch die Natur dieser tribologischen Systeme zu begründen. Insbesondere weisen die Radial-Rillenkugellager Verlustleistungen und Verschleiß durch Bohrreibung und Schlupf auf. Auf diese Weise kann nicht nur ein erheblicher Teil der Antriebsenergie verbraucht, sondern auch die Lebensdauer der Kugellager entscheidend verkürzt werden.

DE 33 02 545 A1 offenbart einen Dentalturbinenaufnahmekopf mit Wälzlagern für Winkelhandstücke.

### Aufgabe

Aufgabe der Erfindung ist es deshalb, Dentalhandstücke mit geringen Verlustleistungen und Verschleiß zur Verfügung zu stellen, die sich zudem durch eine hohe Belastbarkeit, geringe Geräuschentwicklung und Laufruhe auszeichnen.

### Lösung

Diese Aufgabe wird durch den Gegenstand des unabhängigen Anspruchs gelöst. Vorteilhafte Weiterbildungen sind in den Unteransprüchen gekennzeichnet. Die Verwendung der Einzahl soll die Mehrzahl nicht ausschließen, was auch im umgekehrten Sinn zu gelten hat, soweit nichts Gegenteiliges offenbart ist.

Zur Lösung der Aufgabe wird ein Dentalhandstück zum drehenden Antreiben eines rotierenden Dentalwerkzeugs vorgeschlagen. Das rotierende Dentalwerkzeug kann dabei ein Werkzeug zum Bohren, Fräsen, Schleifen, Feilen, Polieren und/oder Finieren bzw. Glätten sein. Das Dentalhandstück besteht aus einem Gehäuse mit einem Handgriff, der typischerweise Kanäle für die Zu- und Abfuhr von Druckgas bzw. Druckluft aufweist. Das Gehäuse umfasst zudem ein Spannfutter zum Aufnehmen des Dentalwerkzeugs und eine Turbine. Die Turbine weist ein Turbinenrad und eine mit dem Turbinenrad verbundene Rotorwelle auf und ist durch die Rotorwelle mit dem Spannfutter des Dentalhandstücks verbunden. Die Rotorwelle kann zu diesem Zweck als Hohlwelle ausgeführt sein, die das Spannfutter in ihrem Hohlraum aufnimmt.

Die Turbine ist mittels Druckgas bzw. Druckluft antreibbar, das bzw. die zu diesem Zweck durch die Zu- und Abluftkanäle im Handgriff zur Turbine geführt werden kann. In der Turbine trifft das Druckgas bzw. die Druckluft auf das Turbinenrad und treibt es an. Die Drehbewegung des Turbinenrades bzw. das entsprechende Drehmoment wird mithilfe der mit dem Turbinenrad verbundenen Rotorwelle auf das Spannfutter und gegebenenfalls auf ein darin eingespanntes Dentalwerkzeug übertragen. Auf diese Weise kann das Spannfutter und das gegebenenfalls darin eingespannte Dentalwerkzeug drehend angetrieben werden.

Die Auslegung des Dentalhandstücks sieht zudem mindestens ein Axial-Rillenkugellager mit einer Mehrzahl von Wälzkörpern vor. Das Axial-Rillenkugellager ist im Gehäuse gelagert und stützt die Rotorwelle sowohl im drehenden als auch im Ruhezustand. Dazu weist das Axial-Rillenkugellager eine Wellenscheibe auf, die mit der Rotorwelle verbunden ist, sowie eine Gehäusescheibe, die zur Lagerung bzw. Fixierung des Lagers im Gehäuse des Dentalhandstücks dient. Die Wälzkörper stellen im Falle eines typischerweise eingesetzten Kugellagers Kugeln dar.

Axial-Rillenkugellager weisen im Vergleich zu Radial-Rillenkugellagern geringere Verlustleistungen bzw. Reibungsverluste auf. Insbesondere können Schlupfanteile nahezu vollständig vermieden oder sogar ausgeschlossen werden. Dadurch kann nicht nur die Geräuschentwicklung beim Antrieb des Dentalwerkzeugs verringert bzw. reduziert, sondern auch die Lebensdauer des Dentalhandstücks erhöht werden.

Axial-Rillenkugellager weisen durch ihre axiale Anordnung von Wellenscheibe, Wälzkörpern und Gehäusescheibe baubedingt eine axiale Belastungsrichtung auf. Sie sind in der Regel zur Aufnahme von axialen Kräften geeignet, weisen jedoch in Bezug auf radiale Kräfte eine in vielen Fällen ungenügende Steifigkeit bzw. Widerstandskraft auf. Aus diesem Grund hat sich das Vorurteil etabliert, dass Axial-Rillenkugellager für den Einsatz in Dentalhandstücken ungeeignet sind, bei denen radiale Kräfte durch hohe asymmetrische äußere Belastungen beim Bohren, Fräsen, Schleifen, Feilen, Polieren und/oder Finieren bzw. Glätten u.a. durch Verkippung bzw. Verkippungsmomente des Dentalwerkzeugs unvermeidlich sind. Ein Fachmann würde deshalb den Einsatz eines Axial-Rillenkugellagers in Dentalhandstücken aufgrund seiner im Vergleich zu Radial-Rillenkugellagern schlechteren radialen Steifigkeit nicht für den Einsatz in Dentalhandstücken in Betracht ziehen, sondern Lager mit radialer Belastungsrichtung wählen, insbesondere Radial-Rillenkugellager. Dies bestätigt sich jedoch nicht in Simulationen und Berechnungen von Dentalhandstücken mit Axial-Rillenkugellagern sowie auch nicht in der Praxis.

Das vorgeschlagene, mit Axial-Rillenkugellagern ausgestattete Dentalhandstück kann mit handelsüblichen Komponenten aufgebaut werden, was die Herstellungskosten niedrig hält. Zudem kann die erfindungsgemäße Auslegung höhere Belastungen in axialer Richtung aufnehmen, gerade wenn statische Belastungen beim Betätigen der Spannzange zum Wechseln des Bohrwerkzeuges auf die Kugellager wirken.

In erfindungsgemäßen Dentalhandstücken können handelsübliche Axial-Rillenkugellager eingesetzt werden. Diese haben jedoch den Nachteil, dass Wellenscheibe, Gehäusescheibe und Käfig mit Kugelsatz keine geschlossene Einheit bilden und bei Montage bzw. Demontage zerfallen, wodurch die Handhabung sehr aufwendig wird. Für einen besseren Sitz des Lagers im Dentalhandstück, insbesondere für eine größere äußere Auflagefläche der Gehäusescheibe, ist es jedoch von Vorteil, wenn die Gehäusescheibe des Axial-Rillenkugellagers eine Auskragung aufweist, die sich in axialer Richtung des Lagers erstreckt. Die Auskragung ist dabei so ausgebildet, dass sie die Wälzkörper des Axial-Rillenkugellagers überdeckt. Die verbleibenden Komponenten des Lagers stellen einfache und kostengünstige Lagerkomponenten dar. Das gilt insbesondere für Wälzkörper, einen gegebenenfalls vorhandenen Wälzkörperkäfig sowie die Wellenscheibe.

Die Auskragung vermindert zudem den Schmiermittelaustrag aus dem Axial-Rillenkugellager, insbesondere den Anteil des Schmiermittelaustrags, der durch die Durchströmung des Dentalhandstücks mit Druckgas bzw. Druckluft entsteht.

Die radiale Steifigkeit der Axial-Rillenkugellager kann zum Beispiel durch eine Erhöhung der axialen Vorspannung verbessert werden, z.B. von den für Radiallager in einer Dentalturbine üblichen 2 N auf einen höheren Wert, der größer als oder gleich 3 N und kleiner als oder gleich 8 N ist, bevorzugterweise jedoch 5 N beträgt (N bezeichnet dabei die Krafteinheit Newton). Durch eine derart erhöhte Vorspannung kann die Widerstandskraft bzw. die radiale Steifigkeit eines konventionellen Axial-Rillenkugellagers auch in Bezug auf radiale Kräfte auf das für Dentalhandstücke erforderliche Maß erhöht werden.

Die Komponenten der vorgeschlagenen Dentalhandstücke wurden lediglich zum besseren Verständnis als Einzelkomponenten dargestellt. Die Komponenten können in einer Ausführungsform als getrennte Komponenten ausgeführt sein. In bevorzugten Ausführungsformen können zwei oder mehr dieser Einzelkomponenten auch einstückig ausgeführt werden. Dies betrifft zum Beispiel die Wellenscheibe des mindestens einen Axial-Rillenkugellagers und das Turbinenrad des Dentalhandstücks, die nicht nur als Einzelkomponenten vorliegen, sondern auch einstückig ausgeführt sein können. Ebenso können die Wellenscheiben und die Rotorwelle und/oder das Turbinenrad einstückig ausgeführt werden. In diesen Fällen sind die Laufbahnen der Wellenscheiben bereits in entsprechende Planflächen des Turbinenrades bzw. der Rotorwelle integriert. Derartige erfindungsgemäße Ausführungsformen weisen demnach keine Einzellager auf, sondern eine Auslegung, bei der die Lager in das Turbinenrad bzw. die Rotorwelle integriert sind. Dies führt zu einer vereinfachten Montage des Dentalhandstücks.

Bei einer Ausführung umfasst ein Axial-Rillenkugellager eine Mehrzahl von Wälzkörpern. Des Weiteren weist das Axial-Rillenkugellager eine Wellenscheibe auf, die mit einer Welle verbunden werden kann, sowie eine Gehäusescheibe, die zur Lagerung bzw. Fixierung des Lagers in einem Gehäuse dient. Die Wälzkörper sind zwischen den Laufbahnen der Wellen- und der Gehäusescheibe - ähnlich wie bei einem Radial-Rillenkugellager - angeordnet. Die zugehörigen Laufbahnen sind jedoch nicht in radialer Richtung, sondern in axialer Richtung angeordnet.

Im Gegensatz zu handelsüblichen Axial-Rillenkugellagern weisen die Axial-Rillenkugellager Gehäusescheiben mit einer Auskragung auf, die sich in axialer Richtung des Lagers erstreckt. Die Auskragung ist dabei so ausgebildet, dass sie die Wälzkörper des Axial-Rillenkugellagers überdeckt. Die Auskragung vergrößert die äußere Mantelfläche bzw. die Auflagefläche, die genutzt werden kann, um das Lager in einem Gehäuse vorzuspannen und/oder zu lagern bzw. zu fixieren.

Die Auskragung vermindert zudem den Schmiermittelaustrag aus dem Axial-Rillenkugellager, insbesondere den Anteil des Schmiermittelaustrags, der durch eine Durchströmung des Lagers mit Druckgas bzw. Druckluft entsteht.

Die Wälzkörper müssen von der Auskragung nicht vollständig überdeckt sein. Um sie vor äußeren Einflüssen zu schützen oder sogar abzuschirmen, ist es jedoch in vielen Fällen sinnvoll, wenn sich die Gehäusescheibe einschließlich Auskragung über 95% bis 105% der Breite des Lagers erstreckt.

Durch die axiale Anordnung sind Axial-Rillenkugellager im Gegensatz zu vielen Radial-Rillenkugellagern nicht vor Zerfallen geschützt. Dies kann insbesondere bei der Montage problematisch sein. Dagegen sind Radial-Rillenkugellager Bauart-bedingt gegen Zerfallen gesichert.

Für eine vereinfachte Montage kann ein Axial-Rillenkugellager mit einer axialen Überdeckung der Gehäusescheibe einschließlich Auskragung von 95% bis 105% der Lagerbreite zusätzlich mit einem Schutz gegen Zerfallen ausgestattet werden. Dazu wird die Auskragung mit einer Nut versehen, wobei die Nut auf der Innenseite der Auskragung ausgebildet ist, d.h. der Seite der Auskragung, die den Wälzkörpern am nächsten liegt. Des Weiteren kann die Wellenscheibe im Bereich der Nut mit einer Stufe versehen werden, so dass die Wellenscheibe einen ersten Teil mit einem kleineren Außendurchmesser und einen zweiten Teil mit einem größeren Außendurchmesser aufweist. Der Teil mit dem kleineren Außendurchmesser ist dabei so angeordnet, dass ein Sprengring von außen in das Lager eingeführt werden kann, um ihn in die Nut der Auskragung einrasten zu lassen. Der zweite Teil der Wellenscheibe ist dementsprechend derart gestaltet, dass ein in der Nut eingerasteter Sprengring die Wellenscheibe gegen axiales Verschieben sperrt. Das Axial-Rillenkugellager kann somit gegen Zerfallen gesichert werden. Das erleichtert die Montage des Axial-Rillenkugellagers auf der Rotorwelle und im Gehäuse des Turbinenkopfes erheblich.

Das vorgeschlagene Axial-Rillenkugellager mit einer Auskragung bietet eine weitere Möglichkeit, das Lager gegen Zerfallen zu schützen. Dazu wird ein Ring an die Planfläche der Auskragung angebracht - z.B. geschweißt - und die Wellenscheibe im Bereich des Rings mit einer Stufe versehen, so dass die Wellenscheibe einen ersten Teil mit einem kleineren Außendurchmesser und einen zweiten Teil mit einem größeren Außendurchmesser aufweist. Der Teil mit dem kleineren Außendurchmesser ist dabei so angeordnet, dass der Ring in die durch die beiden Teile gebildete Stufe eingreift, nachdem er an der Auskragung fixiert wurde. Der zweite Teil der Wellenscheibe ist dabei derart gestaltet, dass der an der Auskragung angebrachte Ring die Wellenscheibe gegen axiales Verschieben sperrt und somit das Axial-Rillenkugellager vor dem Zerfallen schützt.

Neben Auskragungen an der Gehäusescheibe können Axial-Rillenkugellager ebenso mit einer Auskragung an der Wellenscheibe ausgestaltet werden. Die Auskragung ist dabei so ausgebildet, dass sie die Wälzkörper des Axial-Rillenkugellagers überdeckt. Die Auskragung vergrößert die Breite der Bohrung (Innendurchmesser) bzw. die innere Auf- bzw. Anlagefläche, die genutzt werden kann, um das Lager mit einer Welle zu verbinden. Auf diese Weise kann der Sitz des Axial-Rillenkugellagers auf einer Welle verbessert werden.

Wie zuvor müssen die Wälzkörper nicht von der Auskragung der Wellenscheibe vollständig überdeckt sein. Um den Sitz auf der Rotorwelle weiter zu verbessern, ist es jedoch sinnvoll, wenn sich die Wellenscheibe einschließlich Auskragung über 95% bis 105% der Breite des Lagers erstreckt.

In besonders bevorzugten Ausführungsformen erstrecken sich die Gehäusescheibe einschließlich Auskragung sowie die Wellenscheibe einschließlich Auskragung über 95% bis 105% der Breite des Lagers. Zudem ist das Axial-Rillenkugellager wie zuvor beschrieben durch einen Sprengring sowie eine entsprechende Nut bzw. Stufe gegen Zerfallen gesichert. In diesen Fällen stellt sich das Axial-Rillenkugellager von außen betrachtet wie ein Radial-Rillenkugellager dar und kann ebenso wie ein Radial-Rillenkugellager auf der Rotorwelle bzw. im Turbinenkopfmontiert werden. Trotz der beidseitigen radialen Abdeckung der Wälzkörper nimmt das Axial-Rillenkugellager nur einen minimalen Bauraum ein bzw. einen Bauraum, der nicht größer als der eines vergleichbaren Radial-Rillenkugellagers ist.

Die Laufbahnen der Wälzkörper können in Axial-Rillenkugellagern mit geeigneten Schleif- bzw. Hontechnologien in die Wellen- bzw. Gehäusescheiben eingearbeitet werden. Um das Einschleifen der Laufbahnen zu erleichtern, können die Wälzkörper am äußeren Rand der Wellenscheibe des Axial-Rillenkugellagers angeordnet werden, d.h. die Laufbahnen der Wälzkörper weisen - bei vorgegebener Größe der Wellenscheibe und anderer Komponenten, wie z.B. einem gegebenenfalls vorhandenen Kugellagerkäfig - einen möglichst großen Durchmesser auf. Dies ist insbesondere von Vorteil, wenn die Wellenscheibe mit einer Auskragung an ihrem inneren Rand ausgestattet ist. Die Auskragung und die Laufbahn auf der Wellenscheibe haben somit einen möglichst großen Abstand zueinander, so dass für den Einsatz der entsprechenden Schleif- bzw. Honwerkzeuge mehr Platz zur Verfügung steht.

Die Wälzkörper können auch am inneren Rand der Wellenscheibe des Axial-Rillenkugellagers angeordnet werden. Die Laufbahnen haben somit einen kleineren Radius, so dass die Wälzkörper pro Umdrehung der Welle eine möglichst geringe Wegstrecke bewältigen müssen. Eine derartige Anordnung der Wälzkörper bietet zusätzliche Vorteile, wenn die Gehäusescheibe mit einer Auskragung an ihrem äußeren Rand ausgestattet ist. Die Auskragung und die Laufbahn der Wälzkörper auf der Gehäusescheibe haben somit einen möglichst großen Abstand zueinander, so dass für den Einsatz der entsprechenden Schleif- bzw. Honwerkzeuge mehr Platz zur Verfügung steht.

Die Wälzkörper können sich in einem Wälzkörperkäfig befinden, der die Wälzkörper voneinander trennt. Insbesondere hält der Wälzkörperkäfig die Wälzkörper in gleichem Abstand zueinander und verhindert somit, dass die Wälzkörper in der Laufbahn verrutschen oder sich gegenseitig berühren und/oder behindern. Dies ermöglicht einen zuverlässigeren Betrieb, z.B. bei hohen Drehzahlen. In vielen Fällen hält der Wälzkörperkäfig die Kugeln in gleichem Abstand zueinander. Alternativ kann das Axial-Rillenkugellager auch als vollkugelige Variante ohne Wälzkörperkäfig betrieben werden.

Die Laufbahn der Wälzkörper kann zu größeren Durchmessern verschoben werden, wenn der Wälzkörperkäfig die Wälzkörper außen nicht vollständig umschließt. In diesem Fall ist der Wälzkörperkäfig nur innen geschlossen und der äußere Durchmesser der Wellenscheibe durch den Laufbahndurchmesser und den Wälzkörperdurchmesser gegeben.

Die Laufbahn der Wälzkörper kann zu kleineren Durchmessern verschoben werden, wenn der Wälzkörperkäfig die Wälzkörper innen nicht vollständig umschließt. In diesem Fall ist der Wälzkörperkäfig nur außen geschlossen.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: ein Dentalhandstück mit Axial-Rillenkugellagern;
- Fig. 2: ein Axial-Rillenkugellager gemäß dem Stand der Technik;
- Fig. 3: ein Axial-Rillenkugellager mit einer Auskragung an der Gehäusescheibe;
- Fig. 4: ein Axial-Rillenkugellager mit Auskragungen an Gehäuse- sowie Wellenscheibe;
- Fig. 5: ein Axial-Rillenkugellager mit einem Ring an der Auskragung der Gehäusescheibe;
- Fig. 6: ein Dentalhandstück mit einem Turbinenrad mit integrierten Wellenscheiben der Axial-Rillenkugellager; und
- Fig. 7: ein Turbinenrad mit integrierten Wellenscheiben.

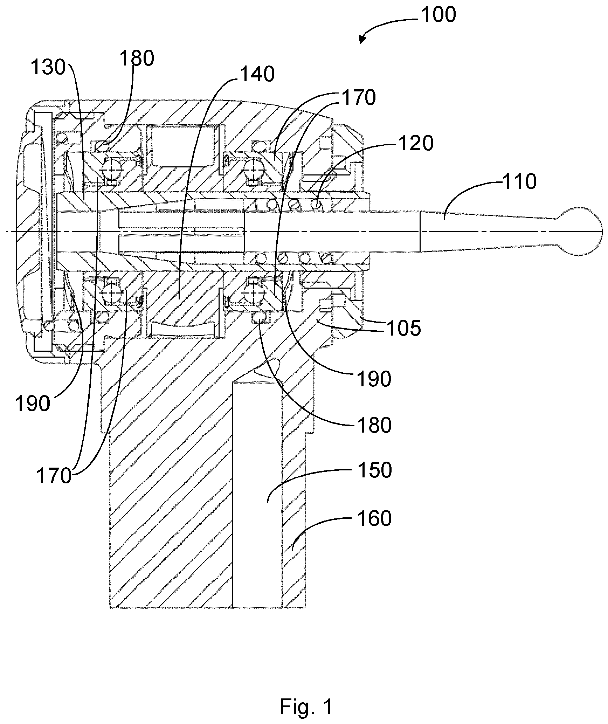

Fig. 1 zeigt ein Dentalhandstück 100 mit einem Gehäuse 105 und einem Dentalwerkzeug 110. Das Dentalwerkzeug 110 ist in ein Spannfutter 120 eingespannt, das sich im Gehäuse 105 des Dentalhandstücks 100 befindet. Das Spannfutter 120 ist mit einer Rotorwelle 130 und über die Rotorwelle 130 mit einem Turbinenrad 140 fest verbunden. Durch die feste Verbindung kann die Rotorwelle 130 Drehbewegungen und Drehmomente des Turbinenrads 140 auf das Spannfutter 120 und das darin eingespannte Dentalwerkzeug 110 übertragen. Die Drehbewegungen bzw. -momente entstehen, wenn das Turbinenrad 140 mithilfe von Druckluft angetrieben wird. Die Druckluft wird zu diesem Zweck über Kanäle 150 in einem Handgriff 160 des Dentalhandstücks 100 über das Turbinenrad 140 geleitet. Turbinenrad 140 und Rotorwelle 130 stellen die Turbine bzw. den pneumatischen Antrieb des Dentalhandstücks 100 dar, der über die Zu- und Abluftkanäle 150 des Handgriffs 160 mit Druckluft versorgt wird.

Die Rotorwelle 130 ist in diesem Ausführungsbeispiel als Hohlwelle ausgebildet. Sie wird durch zwei Axial-Rillenkugellager 170 drehend gestützt, d.h. die Kugellager stützen die Rotorwelle sowohl im Ruhezustand als auch in Zuständen, in denen sich die Rotorwelle dreht. Die Axial-Rillenkugellager 170 sind an einem oberen und an einem unteren Bereich der Rotorwelle 130 angeordnet.

Die Fixierung bzw. Abstützung des Axial-Rillenkugellagers 170 erfolgt typischerweise mithilfe eines zusätzlichen elastischen Elements, um Vibrationen der mit Druckgas bzw. Druckluft betriebenen Turbine im Dentalhandstück und die damit einhergehende Geräuschentwicklung zu dämpfen bzw. abzuschwächen. Das elastische Element besteht zu diesem Zweck z.B. aus einem elastischen Material bzw. Elastomer und kann ringförmig, als O-Ring 180 oder ähnlichem ausgeführt sein. Die Axial-Rillenkugellager 170 sind zudem mithilfe von Wellfederscheiben 190 im Gehäuse 105 des Dentalhandstücks 100 gelagert.

Die Anordnung der Axial-Rillenkugellager 170 an einem oberen und an einem unteren Bereich der Rotorwelle 130 wirkt einer Verkippung der Werkzeugachse im Dentalhandstück 100 entgegen und stabilisiert somit das Dentalwerkzeug 110 und die Rotorwelle 130im Dentalhandstück100. Auf diese Weise wird eine Überlastung der Kugellager 170 durch Verkippung des Dentalwerkzeugs 110 verhindert.

Die O-Ringe 180 stützen die Kugellager 170 in radialer Richtung. Die Wellfederscheiben 190 stützen die Lager 170 in axialer Richtung. Die elastische bzw. federnde Lagerung in radialer Richtung dämpft Schwingungen und Vibrationen des pneumatischen Antriebs, insbesondere des Turbinenrades 140 und der Rotorwelle 130.

Die Wellfederscheiben 190 spannen die Axial-Rillenkugellager 170 mit einer Axialkraft vor. Die Vorspannung erzeugt eine für Dentalhandstücke 100 ausreichende radiale Steifigkeit der Axial-Rillenkugellager 170.

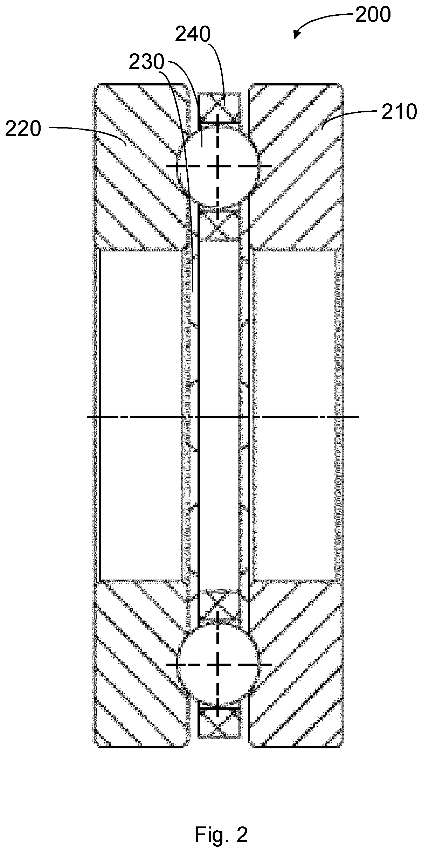

Fig. 2 zeigt ein konventionelles bzw. handelsübliches Axial-Rillenkugellager 200.

Das Axial-Rillenkugellager 200 besteht aus einer Gehäusescheibe 210, einer Wellenscheibe 220 und einer Mehrzahl von Kugeln 230. Die Kugeln 230 sind zwischen der Gehäusescheibe 210 und der Wellenscheibe 220 angeordnet. Sie werden zudem durch einen Kugellagerkäfig 240 voneinander getrennt und im gleichen Abstand zueinander gehalten.

Wird das Axial-Rillenkugellager 200 in einem Dentalhandstück eingesetzt, so ragt die Wellenscheibe 220 nach innen leicht über die Gehäusescheibe 210 hinaus. Ebenso ragt die Gehäusescheibe 210 nach außen leicht über die Wellenscheibe 220 hinaus.

Der Kugellagerkäfig 240 gewährleistet eine gleichmäßige Anordnung der Kugeln 230 entlang ihrer Laufbahnen im Kugellager 200. Er verhindert zudem, dass sich die Kugeln berühren, aneinander reiben, gegenseitig verschieben und / oder in ihrem Umlauf behindern. Dies ist für einen Betrieb des Kugellagers bei hohen Drehzahlen, insbesondere unter Last, von entscheidender Bedeutung, um eine Überlastung des Kugellagers und Verschleiß zu verhindern.

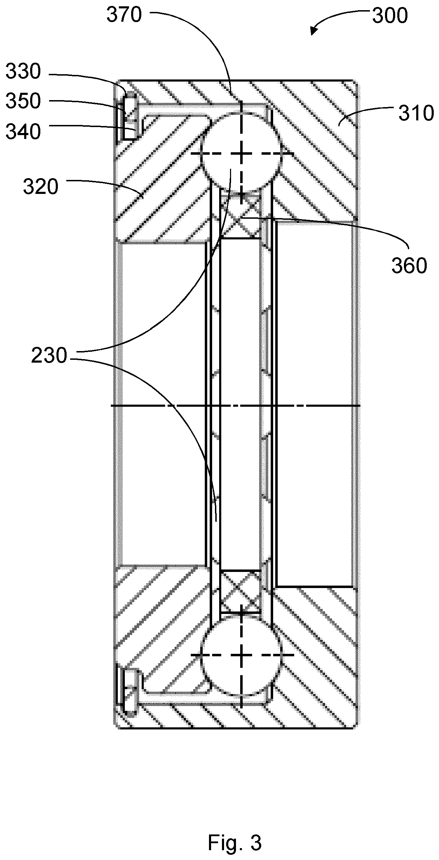

Fig. 3 zeigt ein Axial-Rillenkugellager 300, das im Gegensatz zu dem Axial-Rillenkugellager 200 eine Gehäusescheibe 310 mit einer Auskragung 370 und eine Wellenscheibe 320 mit einer Stufe 340 aufweist. Die Auskragung 370 befindet sich an der Außenseite der Gehäusescheibe 310 und überdeckt die Kugeln 230 des Axial-Rillenkugellagers 300. Zudem weist die Auskragung 370 eine Nut 330 auf. Die Nut 330 kann einen Sprengring 350 aufnehmen. Der Sprengring 350 kann über die Stufe 340 in das Axial-Rillenkugellager 300 eingeführt werden. Die Stufe 340 ist darüber hinaus so ausgebildet, dass der Sprengring 350 im montierten bzw. im in der Nut eingerasteten Zustand die Wellenscheibe 320 gegen axiales Verschieben sperrt. Das Axial-Rillenkugellager 300 weist zudem einen Kugellagerkäfig 360 auf. Der Kugellagerkäfig 360 hält die Kugeln 230 in gleichem Abstand zueinander.

Die Auskragung 370 erhöht die Fläche, mit der das Axial-Rillenkugellager 300 gelagert werden kann, z.B. in einem Gehäuse 105 eines Dentalhandstücks 100. Es kann demnach stabiler gelagert werden als z.B. ein Axial-Rillenkugellager 200.

Die Auskragung vermindert zudem den Schmiermittelaustrag aus dem Axial-Rillenkugellager 300, z.B. durch Druckluft, die in das Axial-Rillenkugellager 300 einströmt. Der Schutz besteht darin, dass die Auskragung 370 zusammen mit der Gehäusescheibe 310, der Wellenscheibe 320 und dem Sprengring 350 ein labyrinthartiges System bildet, das ein Durchströmen des Medium zu mindestens einem, zwei oder sogar drei Richtungswechsel zwingt. Die Druckluft muss dieses Labyrinth überwinden, um einen Effekt auf die Kugeln und ihre Schmierung zu haben. Auf diese Weise werden negative äußere Einflüsse vermieden oder zumindest abgeschwächt.

Nach Montage des Sprengrings 350 ist das Axial-Rillenkugellager 300 gegen Zerfallen geschützt und kann wie ein Radial-Rillenkugellager auf der Rotorwelle bzw. im Gehäuse des Turbinenkopfes montiert werden.

Der Kugellagerkäfig 360 umschließt die Kugeln 230 - im Gegensatz zum Käfig 240 - nicht vollständig. Er ist nach außen hin geöffnet. Dementsprechend liegt die Laufbahn der Kugeln 230 im Axial-Rillenkugellager 300 im Vergleich zum herkömmlichen Axial-Rillenkugellager 200 weiter außen, d.h. die Laufbahn hat einen größeren Durchmesser.

Eine alternative Ausführungsform (nicht gezeigt), die zu der in Fig. 3 gezeigten Ausführungsform sehr ähnlich ist, weist eine im Vergleich zur Auskragung 370 längere Auskragung der Gehäusescheibe auf. In dieser verlängerten Auskragung befindet sich wiederum eine Nut 330, in die der Sprengring 350 eingesetzt werden kann. Dieser ist so ausgestaltet, dass er die Wellenscheibe gegen axiales Verschieben sichert, wenn er in der Nut eingerastet ist. Durch die Verlängerung der Auskragung kann die Ausbildung einer Stufe 340 in der Wellenscheibe entfallen.

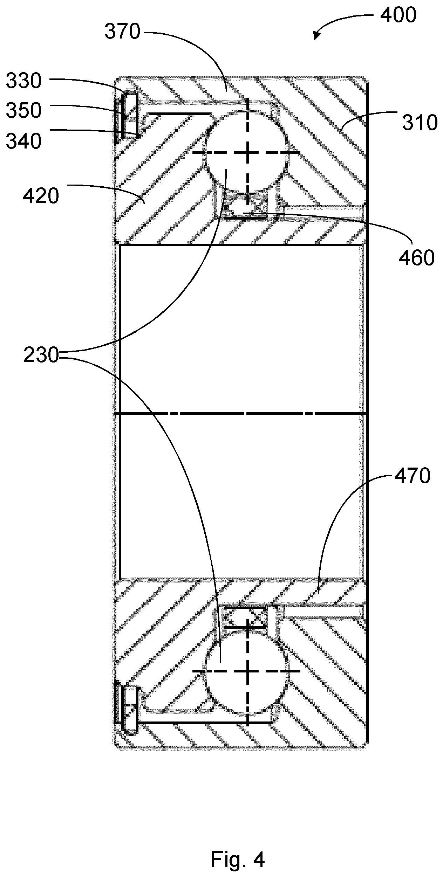

Fig. 4 zeigt ein Axial-Rillenkugellager 400, das im Vergleich zum Axial-Rillenkugellager 300 eine weitergebildete Wellenscheibe 420 und einen weitergebildeten Kugellagerkäfig 460 umfasst. Die Wellenscheibe 420 weist ähnlich zur Gehäusescheibe 310 eine Auskragung 470 auf. Im Gegensatz zur Gehäusescheibe 310 ist die Auskragung 470 an der Innenseite der Wellenscheibe angeordnet und überdeckt die Kugeln 230. Der Kugellagerkäfig 470 ist im Vergleich zum Käfig 370 an die weitergebildete Wellenscheibe 420 angepasst, d.h. sein Innendurchmesser wurde leicht vergrößert, um Platz für die Auskragung 470 zu schaffen.

Die Kugeln 230 des Axial-Rillenkugellagers 400 sind beidseitig überdeckt, d.h. sowohl von der Auskragung 370 der Gehäusescheibe 310 als auch von der Auskragung 470 der Wellenscheibe. Die Kugeln 230 sind in dem Axial-Rillenkugellager 400 deshalb noch besser vor Schmiermittelaustrag geschützt als in einem Axial-Rillenkugellager 300 gemäß Fig. 3. Der zusätzliche Schutz besteht ebenfalls darin, dass die Auskragung 470 zusammen mit der Gehäusescheibe 310 und der Wellenscheibe 420 ein labyrinthartiges System bildet, das ein Durchströmen der Luft zu einer Vielzahl von Richtungsänderungen zwingt. Die Druckluft muss dieses Labyrinth durchströmen, um einen Effekt z.B. auf die Kugeln 230, den Kugellagerkäfig 460, ihre Laufbahnen und ihre Schmierung zu haben. Auf diese Weise werden negative äußere Einflüsse vermieden oder zumindest abgeschwächt.

Des Weiteren stellt sich das Axial-Rillenkugellager 400 durch die beiden Auskragungen 370 und 470 von außen wie ein Radial-Rillenkugellager dar. Darüber hinaus kann es durch den Zerfallsschutz, der durch die Nut 330, die Stufe 340 und den Sprengring 350 gebildet wird, wie ein Radial-Rillenkugellager gehandhabt werden.

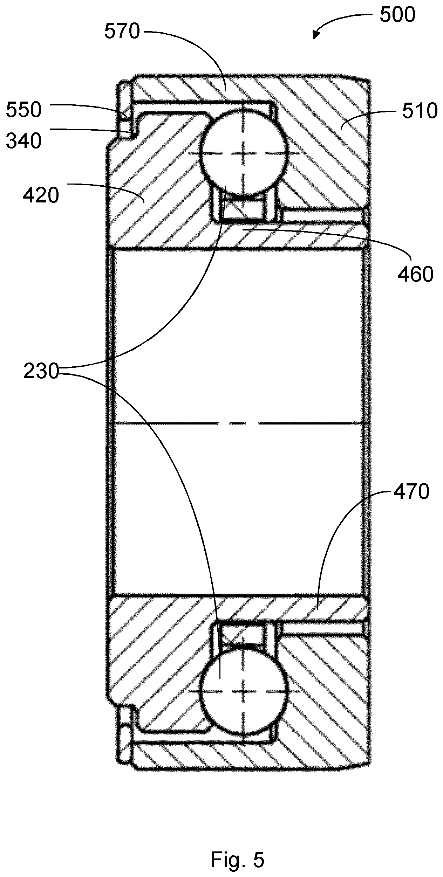

Fig. 5 zeigt ein Axial-Rillenkugellager 500 mit einer Gehäusescheibe 510 und einer Wellenscheibe 420. Das Axial-Rillenkugellager 500 weist im Vergleich zum Axial-Rillenkugellager 400 einen alternativen Zerfallsschutz auf. Das Lager 500 wird dabei nicht durch einen Sprengring wie beim Lager 400, sondern durch einen Ring 550 gegen Zerfallen geschützt. Der Ring 550 ist dabei seitlich an einer Auskragung 570 der Gehäusescheibe 510 fixiert. Der Ring 550 kann zu diesem Zweck nach Montage auf die Auskragung z.B. aufgeschweißt werden.

Damit das Lager 500 durch den angebrachten Ring nicht verbreitert wird, ist die Auskragung 570 etwas kürzer gestaltet als die Auskragung 470 im Axial-Rillenkugellager 400. Dies stellt jedoch lediglich eine bevorzugte Ausführungsform dar, d.h. ein derartiger Ring kann auch auf eine Gehäusescheibe mit einer nicht verkürzten Auskragung aufgebracht werden, die sich zusammen mit der Gehäusescheibe über die gesamte Breite des Lagers erstreckt.

Die Wellenscheibe 420 des Axial-Rillenkugellagers 500 weist ähnlich wie beim Axial-Rillenkugellager 400 eine Stufe 340 auf, die so ausgebildet ist, dass der Ring 550 im montierten Zustand darin eingreift und somit die Wellenscheibe 420 gegen axiales Verschieben sperrt. Im zuvor genannten Fall mit der nicht verkürzten Auskragung kann eine derartige Stufe 340 entfallen.

Zum Schutz eines Axial-Rillenkugellagers gegen Zerfallen kann nicht nur die Auskragung der Gehäusescheibe genutzt werden. In Ausführungsformen, bei der die Wellenscheibe eine Auskragung aufweist, kann ein gleichwertiger Zerfallsschutz mit vergleichbaren Mitteln am Ende der Auskragung der Wellenscheibe erreicht werden. Zu diesem Zweck wiese dann die Gehäusescheibe ggf. eine Stufe auf.

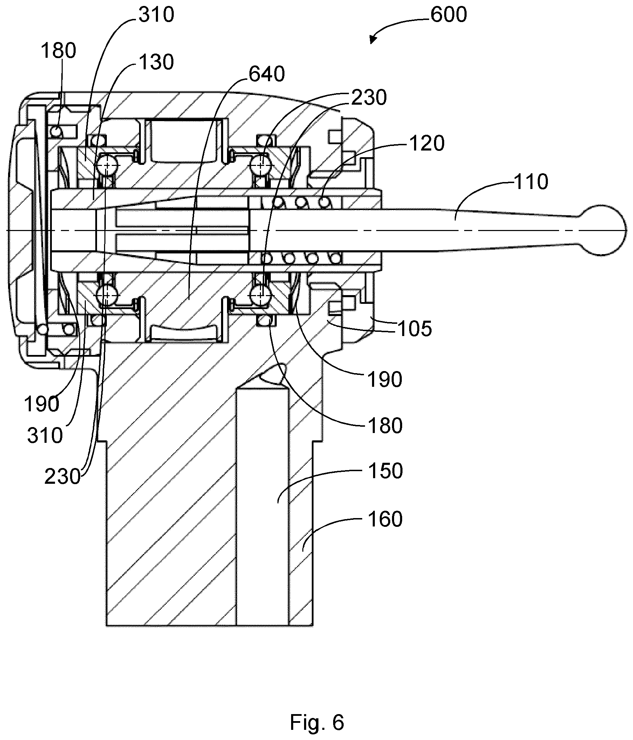

Fig. 6 zeigt ein Dentalhandstück 600, das im Vergleich zum Dentalhandstück 100 ein Turbinenrad 640 mit integrierten Wellenscheiben aufweist. Das Turbinenrad 640 stellt dabei eine einstückige Ausführungsform des Turbinenrades 140 und der Wellenscheiben der Axial-Rillenkugellager dar.

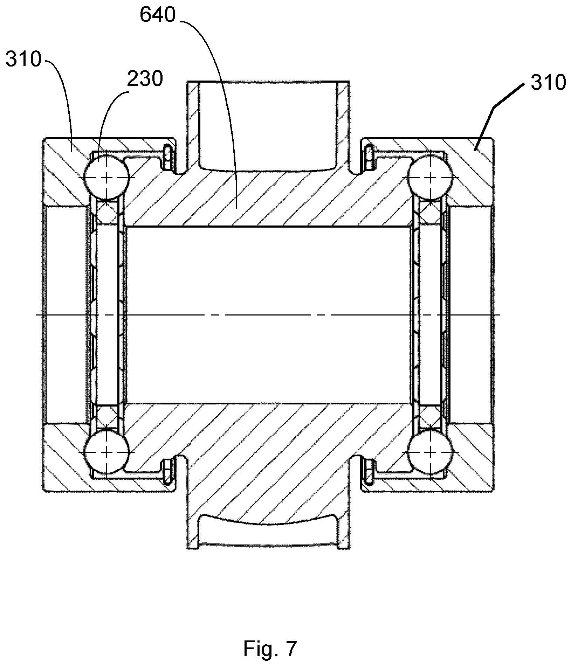

Fig. 7 zeigt den Verbund aus Turbinenrad 640 mit integrierten Wellenscheiben. Ferner zeigt Fig. 7 die Wälzlager 230 und Gehäusescheiben 310, die ebenfalls in Fig. 6 zu sehen sind, nochmals in größerem Maßstab. Der Verbund kann außerhalb des Dentalhandstücks 600 zusammengebaut und im zusammengebauten Zustand auf die Rotorwelle montiert und in das Gehäuse 105 eingesetzt werden.

Neben einer einstückigen Ausführung des Turbinenrades und der Wellenscheiben können auch die Wellenscheiben und die Rotorwelle einstückig ausgeführt werden. Das gilt nicht nur für die Turbinenräder 140, Rotorwellen 130 und Wellenscheiben 320, sondern auch für andere Ausführungsformen dieser drei Komponenten.

### Glossar

### Auskragung

Eine Auskragung bezeichnet einen vorspringenden Teil eines Bauteils, das aus dem Bauteil heraus- bzw. hinausragt.

### Axial-Rillenkugellager

Ein Axial-Rillenkugellager ist ein Kugellager, bei dem eine Gehäusescheibe, Kugeln und eine Wellenscheibe in axialer Richtung hintereinander angeordnet sind.

### Bohrreibung

Bohrreibung entsteht am Auflagepunkt eines sich um die vertikale Achse drehenden Körpers auf einer Ebene.

### Kugellager

Ein Kugellager ist ein Wälzlager, bei dem die Wälzkörper Kugeln sind.

### Radiallager

Ein Radiallager ist ein Wälzlager, bei dem ein Außenring, Wälzkörper und ein Innenring in radialer Richtung hintereinander angeordnet sind. Der Außenring hat dabei in der Regel einen größeren Umfang als der Innenring. Der Innenring weist dagegen in der Regel einen kleineren Umfang auf.

### Schlupf

Schlupf bezeichnet im Allgemeinen das Abweichen der Geschwindigkeiten miteinander in Reibkontakt stehender mechanischer Elemente sowie die damit einhergehende Relativverschiebung der mechanischen Elemente verbunden mit Reibungsverlusten bzw. Verlustleistungen.

### Spannfutter

Als Spannfutter wird eine Vorrichtung bezeichnet, die an Werkzeugen (z.B. einem Dentalhandstück) die Einsatzwerkzeuge wie Bohrer oder Fräser aufnimmt.

### Wälzlager

Ein Wälzlager ist ein Lager für drehende Bauteile wie Achsen oder Wellen, bei denen zwischen mindestens einem ersten Ring, der mit einem Gehäuse verbunden ist und dementsprechend auch als Außenring bezeichnet wird, und mindestens einem zweiten Ring, der mit dem drehenden Bauteil verbunden ist und dementsprechend Innenring genannt wird, Wälzkörper bzw. rollende Körper den Reibungswiderstand zwischen den Ringen bzw. Scheiben verringern. Wälzlager können eine oder mehrere Reihen von Wälzkörpern aufweisen, die ggf. durch weitere Ringe bzw. Scheiben voneinander getrennt werden. Die Wälzkörper rollen z.B. auf gehärteten Stahlflächen mit optimierter Schmierung ab, um die Rollreibung gering zu halten. Sie bewegen sich dabei auf Laufbahnen bzw. Rillen, die in die Ringe eingeschliffen sind. Wälzlager können, je nach Bauform, radiale und/oder axiale Kräfte aufnehmen.

### Wälzkörper

Ein Wälzkörper ist ein Teil eines Wälzlagers, der den Reibungswiderstand zwischen den Ringen bzw. Scheiben eines Wälzlagers verringert. Wälzkörper eines Wälzlagers können Kugeln, Rollen, Zylinder, Nadeln, Tonnen oder Kegel sein.

### Wälzkörperkäfig

Ein Wälzkörperkäfig ist ein ringförmiges Bauteil, das die Wälzkörper eines Wälzlagers aufnehmen und in festen, bevorzugterweise gleichen Abständen zueinander halten kann. Wälzkörperkäfige können einteilig oder zweiteilig ausgeführt sein.

### Wellfederscheibe

Eine Wellfederscheibe ist eine wellenförmig geformte Feder- bzw. Unterlegscheibe, die ihre federnde Wirkung dadurch erzeugt, dass sie kegelförmig, zweiseitig verbogen oder gewellt ist. Wellfederscheiben werden zum definierten, axialen Vorspannen von Wälzlager, vorwiegend von Miniatur- und Kleinkugellagern, verwendet.

### Bezugszeichen

- 100: Dentalhandstück
- 105: Gehäuse
- 110: Dentalwerkzeug
- 120: Spannfutter
- 130: Rotorwelle
- 140: Turbinenrad
- 150: Kanal
- 160: Handgriff
- 170: Axial-Rillenkugellager
- 180: O-Ring
- 190: Wellfederscheibe

- 200: Axial-Rillenkugellager
- 210: Gehäusescheibe
- 220: Wellenscheibe
- 230: Kugel
- 240: Kugellagerkäfig

- 300: Axial-Rillenkugellager
- 310: Gehäusescheibe
- 320: Wellenscheibe
- 330: Nut
- 340: Stufe
- 350: Sprengring
- 360: Kugellagerkäfig
- 370: Auskragung

- 400: Axial-Rillenkugellager
- 420: Wellenscheibe
- 460: Kugellagerkäfig
- 470: Auskragung

- 500: Axial-Rillenkugellager
- 510: Gehäusescheibe
- 550: Ring
- 570: Auskragung

- 600: Dentalhandstück
- 640: Turbinenrad mit integrierten Wellenscheiben

zitierte Literatur
zitierte Patentliteratur
US 4,249,869 A
DE 10 2014 220 872 A1
DE 10 2015 012 332 A1
DE 33 02 545 A1

## Patentansprüche

1. Dentalhandstück (100; 600) zum drehenden Antreiben eines rotierenden Dentalwerkzeugs (110) mit:
einem Gehäuse (105), das einen Handgriff (160) und ein Spannfutter (120) zum Aufnehmen des Dentalwerkzeugs (110) im Dentalhandstück (100) aufweist;
einer mittels Druckgas und/oder Druckluft antreibbaren Turbine mit einem Turbinenrad (140; 640) und einer mit dem Turbinenrad (140; 640) verbundenen Rotorwelle (130);
wobei die Rotorwelle (130) mit dem Spannfutter (120) verbunden ist, um die Drehbewegung des Turbinenrads (140; 640) auf das Spannfutter (120) zu übertragen;
zwei Axial-Rillenkugellager (170; 200; 300; 400; 500), die an einem oberen und einem unteren Bereich der Rotorwelle (130) angeordnet sind,
wobei jedes Axial-Rillenkugellager eine Wellenscheibe (220; 320; 420), eine Gehäusescheibe (210; 310; 510) und Wälzkörper (230) aufweist,
wobei die Wälzkörper (230) zwischen der Wellenscheibe (220; 320; 420) und der Gehäusescheibe (210; 310; 510) angeordnet sind;
wobei die Wellenscheibe (220; 320; 420) des Axial-Rillenkugellagers (170; 200; 300; 400; 500) an der Rotorwelle (130) angreift oder mit dem Turbinenrad integriert ist;
wobei die Gehäusescheibe (210; 310; 510) des Axial-Rillenkugellagers (170; 200; 300; 400; 500) in dem Gehäuse (105) gelagert ist,
wobei die Gehäusescheibe (310; 510) eine sich in axialer Richtung des Axial-Rillenkugellagers (170; 300; 400; 500) erstreckende Auskragung (370; 570) aufweist;
wobei die Auskragung (370; 570) die Wälzkörper (230) des Axial-Rillenkugellagers (170; 300; 400; 500) außen überdeckt.

2. Dentalhandstück (100; 600) nach Anspruch 1, **dadurch gekennzeichnet, dass** das Axial-Rillenkugellager (170; 200; 300; 400; 500) mit einer Kraft größer als oder gleich 3N und kleiner als oder gleich 8 N in axialer Richtung vorgespannt ist.

3. Dentalhandstück (100; 600) nach Anspruch 1 oder 2, **dadurch gekennzeichnet, dass** das Turbinenrad (640) und/oder die Rotorwelle (130) und/oder die Wellenscheibe (220; 320; 420) des mindestens einen Axial-Rillenkugellagers (170; 200; 300; 400; 500) einstückig ausgeführt sind.

## Claims

1. A dental handpiece (100; 600) for rotationally driving a rotary dental tool (110) with:
a housing (105) having a handle (160) and a chuck (120) for receiving the dental tool (110) in the dental handpiece (100);
a turbine that can be driven by means of pressurized gas and/or pressurized air, with a turbine wheel (140; 640) and a rotor shaft (130) connected to the turbine wheel (140; 640);
wherein the rotor shaft (130) is connected to the chuck (120) to transmit the rotational movement of the turbine wheel (140; 640) to the chuck (120);
two axial deep groove ball bearings (170; 200; 300; 400; 500) disposed at an upper and a lower area of the rotor shaft (130),
wherein each axial deep groove ball bearing has a shaft locating washer (220; 320; 420), a housing washer (210; 310; 510) and rolling elements (230),
wherein the rolling elements (230) are disposed between the shaft locating washer (220; 320; 420) and the housing washer (210; 310; 510);
wherein the shaft locating washer (220; 320; 420) of the axial deep groove ball bearing (170; 200; 300; 400; 500) engages with the rotor shaft (130) or is integrated with the turbine wheel;
wherein the housing washer (210; 310; 510) of the axial deep groove ball bearing (170; 200; 300; 400; 500) is mounted in the housing (105),
wherein the housing washer (310; 510) has a projection (370; 570) extending in the axial direction of the axial deep groove ball bearing (170; 300; 400; 500);
wherein the projection (370; 570) covers the rolling elements (230) of the axial deep groove ball bearing (170; 300; 400; 500) on the outside.

2. The dental handpiece (100; 600) according to claim 1, **characterized in that** the axial deep groove ball bearing (170; 200; 300; 400; 500) is preloaded with a force greater than or equal to 3 N and less than or equal to 8 N in the axial direction.

3. The dental handpiece (100; 600) according to claim 1 or 2, **characterized in that** the turbine wheel (640) and/or the rotor shaft (130) and/or the shaft locating washer (220; 320; 420) of the at least one axial deep groove ball bearing (170; 200; 300; 400; 500) are executed in one piece.

## Revendications

1. Pièce à main dentaire (100 ; 600) destinée à entraîner en rotation un outil dentaire (110) rotatif, avec :
un boîtier (105) qui présente une poignée (160) et un mandrin (120) apte à recevoir l'outil dentaire (110) dans la pièce à main dentaire (100) ;
une turbine pouvant être entraînée par un gaz comprimé et/ou de l'air comprimé, avec une roue de turbine (140 ; 640) et un arbre de rotor (130) relié à la roue de turbine (140 ; 640) ;
dans laquelle l'arbre de rotor (130) est relié au mandrin (120) afin de transmettre le mouvement de rotation de la roue de turbine (140 ; 640) au mandrin (120) ;
deux roulements à billes axiaux à gorge profonde (170 ; 200 ; 300 ; 400 ; 500), disposés au niveau d'une zone supérieure et inférieure de l'arbre de rotor (130),
dans laquelle chaque roulement à billes axial à gorge profonde présente une bague intérieure (220 ; 320 ; 420), une bague extérieure (210 ; 310 ; 510) et des éléments roulants (230),
dans laquelle les éléments roulants (230) sont disposés entre la bague intérieure (220 ; 320 ; 420) et la bague extérieure (210 ; 310 ; 510) ;
dans laquelle la bague intérieure (220 ; 320 ; 420) du roulement à billes axial à gorge profonde (170 ; 200 ; 300 ; 400 ; 500) est en prise avec l'arbre de rotor (130) ou est intégrée à la roue de turbine ;
dans laquelle la bague extérieure (210 ; 310 ; 510) du roulement à billes axial à gorge profonde (170 ; 200 ; 300 ; 400 ; 500) est logée dans le boîtier (105),
dans laquelle la bague extérieure (310 ; 510) présente une saillie (370 ; 570) s'étendant dans une direction axiale du roulement à billes axial à gorge profonde (170 ; 300 ; 400 ; 500),
dans laquelle la saillie (370 ; 570) recouvre extérieurement les éléments roulants (230) du roulement à billes axial à gorge profonde (170 ; 300 ; 400 ; 500).

2. Pièce à main dentaire (100 ; 600) selon la revendication 1, **caractérisée en ce que** le roulement à billes axial à gorge profonde (170 ; 200 ; 300 ; 400 ; 500) est précontraint dans une direction axiale avec une force supérieure ou égale à 3 N et inférieure ou égale à 8 N.

3. Pièce à main dentaire (100 ; 600) selon la revendication 1 ou 2, **caractérisée en ce que** la roue de turbine (640) et/ou l'arbre de rotor (130) et/ou la bague intérieure (220 ; 320 ; 420) dudit au moins un roulement à billes axial à gorge profonde (170 ; 200 ; 300 ; 400 ; 500) sont formés d'un seul tenant.
